# EUROPÄISCHE PATENTSCHRIFT

(11) **EP 1 504 516 B1**
(45) Veröffentlichungstag und Bekanntmachung des Hinweises auf die Patenterteilung: **05.07.2006**
(21) Anmeldenummer: 03727161.6
(22) Anmeldetag: 31.03.2003
(51) Int. Cl.: H02K 55/04, F28D 15/00

(54) **SUPRALEITUNGSEINRICHTUNG MIT THERMISCH AN EINE ROTIERENDE SUPRALEITENDE WICKLUNG ANGEKOPPELTEM KALTKOPF EINER KÄLTEEINHEIT**
SUPERCONDUCTIVE DEVICE COMPRISING A REFRIGERATION UNIT, EQUIPPED WITH A REFRIGERATION HEAD THAT IS THERMALLY COUPLED TO A ROTATING SUPERCONDUCTIVE WINDING
DISPOSITIF DE SUPRACONDUCTIVITE A UNITE DE REFROIDISSEMENT DOTEE D'UNE TETE DE REFROIDISSEMENT THERMIQUEMENT COUPLEE A UNE BOBINE SUPRACONDUCTRICE ROTATIVE

(30) Priorität: 15.05.2002 DE 10221635
(43) Veröffentlichungstag der Anmeldung: 09.02.2005
(73) Patentinhaber: SIEMENS AKTIENGESELLSCHAFT, 80333 München (DE)
(72) Erfinder: FRANK, Michael, 91080 Uttenreuth (DE); NICK, Wolfgang, 90419 Nürnberg (DE); VAN HASSELT, Peter, 91058 Erlangen (DE)
(86) Internationale Anmeldenummer: PCT/DE2003/001052
(87) Internationale Veröffentlichungsnummer: WO 2003/098786

(56) Entgegenhaltungen:
- DE-A- 10 039 964
- US-A- 5 385 010
- US-A- 5 482 919
- PATENT ABSTRACTS OF JAPAN vol. 1995, no. 08, 29. September 1995 (1995-09-29) -& JP 07 127981 A (TOSHIBA CORP), 19. Mai 1995 (1995-05-19)

## Beschreibung

Die Erfindung bezieht sich auf eine Supraleitungseinrichtung mit einem um eine Rotationsachse drehbar gelagerten Rotor, der mindestens eine supraleitende Wicklung aufweist, deren Leiter in einem Wicklungsträger angeordnet sind, und mit einer Kälteeinheit, die mindestens einen thermisch an die Wicklung angekoppelten Kaltkopf aufweist. Eine entsprechende Einrichtung geht aus der US 5,482,919 A hervor.

Neben den seit langem bekannten metallischen Supraleitermaterialien wie z.B. NbTi oder Nb₃Sn, die sehr niedrige Sprungtemperaturen T_{c} besitzen und deshalb auch Niedrig(Low)-T_{c-}Supraleitermaterialien oder LTS-Materialien genannt werden, kennt man seit 1987 metalloxidische Supraleitermaterialien mit Sprungtemperaturen von über 77 K. Letztere Materialien werden auch als Hoch(High)-T_{c}-Supraleitermaterialien oder HTS-Materialien bezeichnet und ermöglichen prinzipiell eine Kühltechnik mit flüssigem Stickstoff (LN₂).

Mit Leitern unter Verwendung solcher HTS-Materialien versucht man, auch supraleitende Wicklungen zu erstellen. Es zeigt sich jedoch, dass bisher bekannte Leiter nur eine verhältnismäßig geringe Stromtragfähigkeit in Magnetfeldern mit Induktionen im Tesla-Bereich besitzen. Dies macht es vielfach erforderlich, dass die Leiter solcher Wicklungen trotz der an sich hohen Sprungtemperaturen der verwendeten Materialien dennoch auf einem unterhalb von 77 K liegenden Temperaturniveau, beispielsweise zwischen 10 und 50 K gehalten werden müssen, um so bei Feldstärken von einigen Tesla nennenswerte Ströme tragen zu können. Ein solches Temperaturniveau liegt deutlich höher als 4,2 K, der Siedetemperatur des flüssigen Heliums (LHe), mit dem bekannte metallische Supraleitermaterialien wie Nb₃Sn oder NbTi gekühlt werden.

Es kommen deshalb zur Kühlung von Wicklungen mit HTS-Leitern, in dem genannten Temperaturbereich bevorzugt Kälteeinheiten in Form von Kryokühlern mit geschlossenem He-Druckgaskreislauf zum Einsatz. Solche Kryokühler sind insbesondere vom Typ Gifford-McMahon oder Stirling oder sind als sogenannte Pulsröhrenkühler ausgebildet. Solche Kälteeinheiten haben zudem den Vorteil, dass die Kälteleistung quasi auf Knopfdruck zur Verfügung steht und dem Anwender die Handhabung von tiefkalten Flüssigkeiten erspart wird. Bei einer Verwendung solcher Kälteeinheiten wird eine supraleitende Einrichtung wie z.B. eine Magnetspule oder eine Transformatorwicklung nur durch Wärmeleitung zu einem Kaltkopf eines Refrigerators indirekt gekühlt (vgl. z.B. "Proc. 16^{th} Int. Cryog. Engng. Conf. (ICEC 16)", Kitakyushu, JP, 20. - 24.05.1996, Verlag Elsevier Science, 1997, Seiten 1109 bis 1129).

Eine entsprechende Kühltechnik ist auch für einen aus der US 5,482,919 A entnehmbaren supraleitenden Rotor einer elektrischen Maschine vorgesehen. Der Rotor enthält eine rotierende Wicklung aus HTS-Leitern, die mittels einer als Stirling-oder Gifford-McMahon- oder Pulsröhrenkühler ausgelegten Kälteeinheit auf einer gewünschten Betriebstemperatur zwischen 30 und 40 K zu halten ist. Die Kälteeinheit enthält hierzu in einer speziellen Ausführungsform einen mitrotierenden, in der Schrift nicht weiter ausgeführten Kaltkopf, dessen kältere Seite thermisch an die Wicklung indirekt über wärmeleitende Elemente gekoppelt ist. Ferner umfasst die Kälteeinheit der bekannten Maschine eine außerhalb ihres Rotors befindliche Kompressoreinheit, die den Kaltkopf über eine rotierende, nicht näher ausgeführte Kupplung einer entsprechenden Transfereinheit das erforderliche Arbeitsgas zuführt. Die Kupplung versorgt außerdem über zwei Schleifringe auch einen Ventiltrieb der Kälteeinheit, der in den Kaltkopf integriert ist, mit der nötigen elektrischen Energie. Dieses Konzept macht es erforderlich, dass in der Transfereinheit mindestens zwei Gasverbindungen koaxial geführt und mindestens zwei elektrische Schleifringe vorgesehen werden müssen. Zudem ist die Zugänglichkeit der mitrotierenden Teile der Kälteeinheit und insbesondere des Ventiltriebs in dem Rotor der Maschine behindert, da bei erforderlichen Wartungen das Rotorgehäuse geöffnet werden muss. Des Weiteren ist die Funktion eines herkömmlichen Ventiltriebs bei schneller Rotation, wie sie bei Synchronmotoren oder Generatoren gegeben ist, nicht gesichert.

Dokument DE 100 39 964 offenbart eine elektrische Maschine mit einem Rotor mit supraleitender Wicklung, die auf einen Wicklungsträger mit einem innen liegenden Hohlraum aufgebracht ist. In den Hohlraum wird über ein Wärmerohr kaltes Neon geleitet. Die Kühlung des Neons erfolgt über einen Kondensor am Kühlfinger eines Gifford-McMahon-Kryokühlers.

Aufgabe der vorliegenden Erfindung ist es, ausgehend von diesem Stand der Technik die Einrichtung mit den eingangs genannten Merkmalen dahingehend auszugestalten, dass mit ihr ein sicherer und wirtschaftlicher Betrieb der Kälteeinheit sowohl bei der Abkühlphase als auch im Stillstand und bei Rotation des Rotors in einem Temperaturbereich unter 77 K bei vergleichsweise vermindertem apparativen Aufwand zu gewährleisten ist.

Diese Aufgabe wird erfindungsgemäß mit den im Anspruch 1 angegebenen Merkmale gelöst.

Bei der erfindungsgemäßen Ausgestaltung der Supraleitungseinrichtung ist folglich die gesamte Kälteeinheit mit ihren eventuell beweglichen Teilen außerhalb des Rotors angeordnet und somit jederzeit leicht zugänglich. Die Bereitstellung der Kälteleistung bzw. der Wärmetransfer erfolgt von einem feststehenden Kaltkopf in den Rotor über die Wärmerohre, die ohne mechanisch bewegte Teile den Transport des jeweiligen Kältemittels sicherstellen. Dabei wird das für den Dauerbetrieb bzw. die Betriebsphase vorgesehene erste Kältemittel in einem Kreisprozess an einer Kondensorvorrichtung, die gut wärmeleitend mit dem Kaltkopf verbunden ist, unter Wärmeabgabe kondensiert. Anschließend rinnt das flüssige Kondensat durch das hierfür vorgesehene erste Wärmerohr in den seitlichen Hohlraum des Rotors und von dort in dessen zentralen Hohlraum oder direkt in diesen. Der Transport des Kondensats durch das erste Wärmerohr geschieht unter dem Einfluss der Schwerkraft aufgrund einer sogenannten Thermosyphon-Wirkung und gegebenenfalls durch die Kapillarkraft der Innenwand des Wärmerohrs. Hierzu wirkt dieses Rohr in an sich bekannter Weise als ein "Docht". Diese Funktion kann durch passende Ausgestaltung oder Auskleidung der Innenwand noch optimiert werden. Am Ende des ersten Wärmerohrs tropft bzw. läuft das Kondensat in den vorgesehenen Hohlraum. Das im Bereich der Wicklung befindliche Kondensat wird dort unter Aufnahme von Wärme zumindest teilweise verdampft. Das erste Kältemittel strömt dann durch das Innere des ersten Wärmerohres zurück in die Kondensorvorrichtung. Der Rückstrom wird dabei getrieben durch einen leichten Überdruck in dem als Verdampferteil wirkenden zentralen Hohlraum relativ zu den als Kondensator wirkenden Teilen der Kondensorvorrichtung. Dieser durch das Entstehen von Gas im Verdampfer und das Verflüssigen im Kondensor erzeugte Unterdruck führt zu dem gewünschten Kältemittelrückstrom. Entsprechende Kältemittelströmungen sind von sogenannten "Heat-Pipes" her an sich bekannt.

Das wenigstens eine weitere Wärmerohr, das mit einem bereits bei höheren Temperaturen kondensierenden Gas wie beispielsweise Stickstoff, Argon oder einem Kohlenwasserstoff als einem weiteren Kältemittel gefüllt ist, stellt einen in den zentralen Hohlraum hineinragenden, dort endseitig abgeschlossenen Kühlfinger dar. Die Wärmeübertragung während einer Abkühlphase erfolgt bis zu diesem Rohrende unter Ausnutzung eines Thermosyphon-Effektes durch Kondensation und Verdampfung des weiteren Kältemittels. Von diesem Rohrende im Bereich des zentralen Hohlraumes erfolgt die Wärmeübertragung an die zu kühlenden Teile des Rotors durch Konvektion. Die hierbei auftretende Temperaturdifferenz von einigen Kelvin zwischen dem Ende des Kühlfingers und der Wand des zentralen Hohlraums sind für den Zweck einer Vorkühlung ohne weiteres tolerabel.

Bei der erfindungsgemäßen Supraleitungseinrichtung werden also zwei unterschiedliche Kühlverfahren kombiniert. Ein erstes Verfahren, das eine reine Thermosyphon-Kühlung darstellt, sieht ein Arbeitsgas als erstes Kältemittel zur Kühlung während der Betriebsphase vor. Erst in Verbindung mit diesem ersten Verfahren der konvektiven Kühlung können weitere Thermosyphons mit anderen Gasen (d.h. mit mindestens einem weiteren Kältemittel), und damit anderen Arbeitstemperaturen gleichzeitig thermisch an die zu kühlenden Teile des Rotors angekoppelt werden (= weiteres Verfahren). Dadurch wird eine effektive und kostengünstige Vorkühlung bei optimaler Ausnutzung der Kälteleistung des Kaltkopfes ermöglicht.

Weitere Vorteile der erfindungsgemäßen Ausgestaltung der Supraleitungseinrichtung sind unter anderem darin zu sehen, dass keine bewegten Teile wie z.B. Ventilatoren oder Pumpen zur Umwälzung des Kältemittels erforderlich sind. Außerdem kann die Kälteeinheit an die unterschiedlichen Anforderungen einer Maschinenaufstellung leicht angepasst werden. Insbesondere lassen sich je nach Auslegung mehrere Meter lange Wärmerohre vorsehen, so dass z.B. eine Kältemaschine zur Erleichterung ihrer Wartung an einer zugänglichen Stelle montiert sein kann, während der eigentliche Motor bzw. Generator schwer zugänglich eingebaut ist. Der Wärmetransfer bzw. die Bereitstellung der Kälteleistung ist bei der erfindungsgemäßen Ausgestaltung also besonders einfach und wirtschaftlich.

Vorteilhafte Ausgestaltungen der erfindungsgemäßen Supraleitungseinrichtung gehen aus den abhängigen Ansprüchen hervor.

So können selbstverständlich mehrere als Kühlfinger gestaltete weitere Wärmerohre mit Füllungen weiterer Kältemittel vorgesehen werden, die sich hinsichtlich ihrer Kondensationstemperaturen unterscheiden. Es wird so eine mehrstufige Abkühlung ermöglicht.

Ferner ist eine besonders einfache Abdichtung des Kältemittelraumes dadurch zu erreichen, dass der zentrale Hohlraum auf einer Seite durch den Wicklungsträger abgeschlossen ist und der seitliche Hohlraum an der dem Kaltkopf zugewandten Seite durch eine Dichtungseinrichtung mit mitrotierenden Teilen abgedichtet wird. Dabei kommt als Dichtungseinrichtung vorzugsweise zumindest eine Dichtung aus der Gruppe Ferrofluiddichtung, Labyrinthdichtung, Spaltdichtung in Frage.

Als Kälteeinheit lassen sich praktisch alle Typen von Kältemaschinen vorsehen, die einen auf ein vorbestimmtes Temperaturniveau zu legenden Kaltkopf aufweisen. Bevorzugt werden Kryokühler insbesondere mit geschlossenem He-Druckgaskreislauf vorgesehen, da diese einen einfachen Aufbau aufweisen und für eine indirekte Kühltechnik wie bei der erfindungsgemäßen Supraleitungseinrichtung besonders geeignet sind. Entsprechende, auch als regenerative Kryokühler bezeichnete Kühler weisen einen Regenerator bzw. regenerativen Arbeitszyklus entsprechend der üblichen Klassifikation der Kryokühler auf (vgl. z.B. den genannten Proceedings-Band, Seiten 33 bis 44).

Besonders vorteilhaft kann der Kaltkopf mehrstufig ausgebildet sein. Mit seiner zweiten, vergleichsweise wärmeren Stufe ist dann insbesondere eine effektive Vorkühlung möglich.

Außerdem ist es als vorteilhaft anzusehen, wenn die zu kühlende Wicklung und damit ihr Supraleitermaterial mittels des Kaltkopfes auf einer Temperatur unter 77 K, im Falle einer Verwendung von HTS-Material vorzugsweise zwischen 20 und 50 K zu halten ist. Bekannte HTS-Materialien weisen nämlich in diesem mit verhältnismäßig begrenztem Kühlaufwand einzuhaltenden Temperaturbereich eine für übliche Anwendungen hinreichende kritische Stromdichte auf. Die erforderliche Kälteleistung ist bei der erfindungsgemäßen Supraleitungseinrichtung ohne weiteres aufzubringen. Sie liegt z.B. im Bereich von einigen 10 W bei 20 K bis 30 K für eine Synchronmaschine der Größenklasse von etwa 1 bis zu einigen 10 MW mechanischer Leistung.

Darüber hinaus ist es als vorteilhaft anzusehen, wenn der seitliche Hohlraum sich in Richtung auf den mittleren Hohlraum hin erweitert. Dann kann nämlich zum Transport des ersten Kältemittels eventuell neben der Schwerkraft noch die Fliehkraft unterstützend ausgenutzt werden.

Weitere vorteilhafte Ausgestaltungen der erfindungsgemäßen Supraleitungseinrichtung gehen aus den vorstehend nicht angesprochenen abhängigen Ansprüchen hervor.

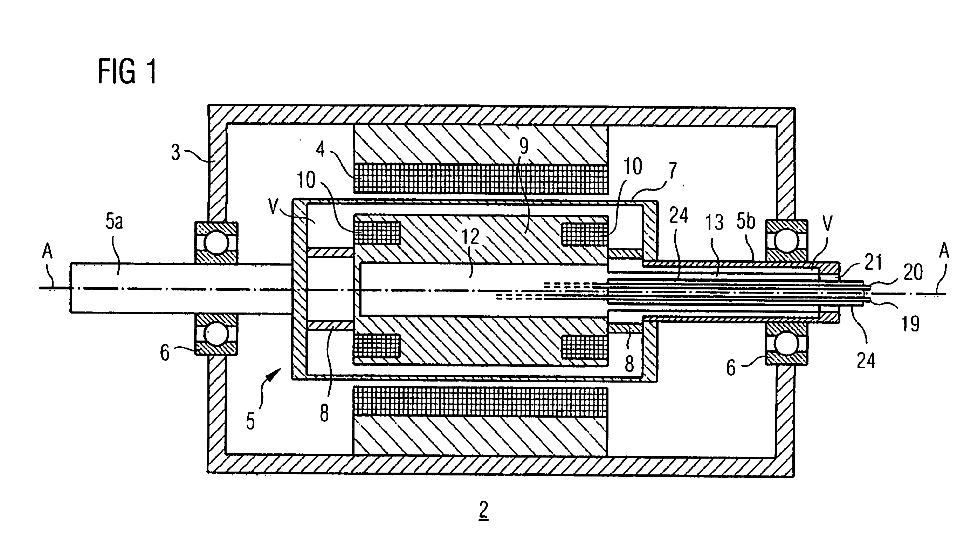

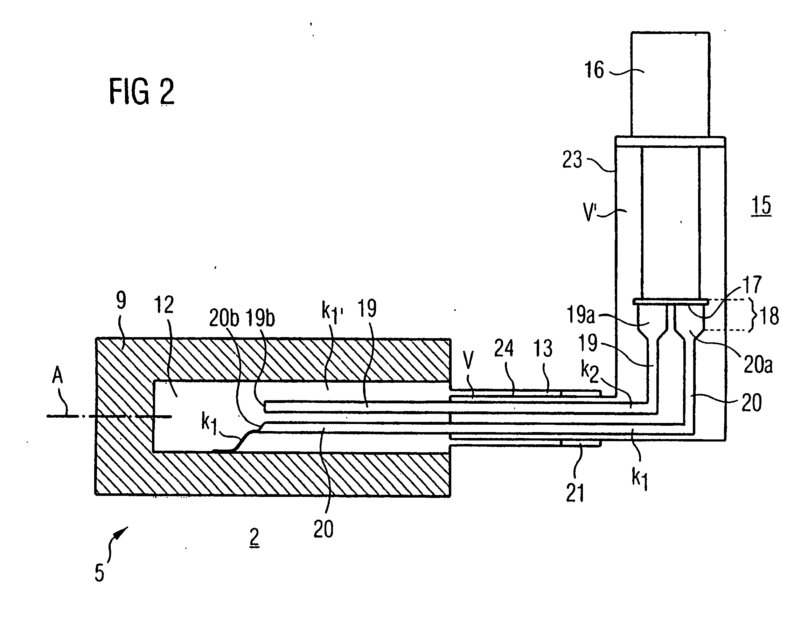

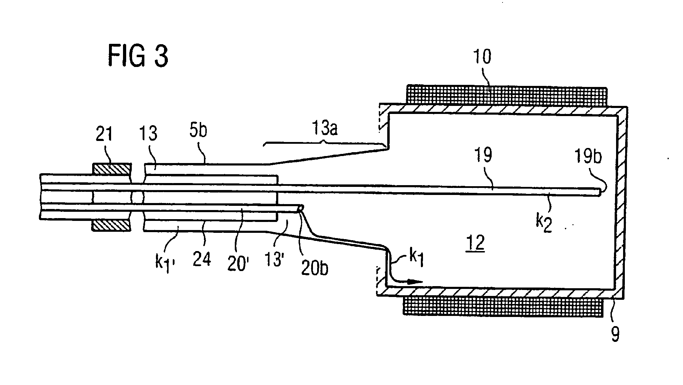

Bevorzugte Ausführungsbeispiele der Supraleitungseinrichtung nach der Erfindung werden nachfolgend an Hand der Zeichnung noch weiter erläutert. Dabei zeigen jeweils schematisch im Längsschnitt
deren Figur 1 eine Ausführungsform des Rotors einer Supraleitungseinrichtung,
deren Figur 2 eine Kälteeinheit für diesen Rotor sowie
deren Figur 3 einen Ausschnitt aus einer weiteren Supraleitungseinrichtung nach der Erfindung.
In den Figuren sind sich entsprechende Teile mit denselben Bezugszeichen versehen.

Bei den nachfolgend an Hand der Figuren aufgezeigten Ausführungsformen von erfindungsgemäßen Supraleitungseinrichtungen kann es sich jeweils insbesondere um einen (Synchron-)Motor oder einen (Synchron-)Generator handeln. Die Supraleitungseinrichtung umfasst eine rotierende, supraleitende Wicklung, die prinzipiell eine Verwendung von metallischem LTS-Material (Niedrig-T_{c}-Supraleitermaterial) oder oxidischem HTS-Material (Hoch-T_{c}-Supraleitermaterial) gestattet. Auch MgB₂ kommt als Supraleitungsmaterial in Frage. Für die nachfolgenden Ausführungsbeispiele sei ein HTS-Material wie z.B. das bekannte (Bi,Pb)₂Sr₂Ca₂Cu₃Oₓ ausgewählt. Die Wicklung kann aus einer Spule oder aus einem System von Spulen in einer 2-, 4- oder sonstigen mehrpoligen Anordnung bestehen. Der prinzipielle Aufbau der sich im Bereich des Rotors befindlichen Teile einer solchen z.B. eine Synchronmaschine bildenden Supraleitungseinrichtung geht aus Figur 1 hervor, wobei von bekannten Ausführungsformen solcher Maschinen ausgegangen wird (vgl. z.B. die genannte US 5,482,919 A oder die WO 00/13296 A).

Die allgemein mit 2 bezeichnete, nur teilweise ausgeführte Einrichtung umfasst ein feststehendes, auf Raumtemperatur befindliches Außengehäuse 3 mit einer Ständerwicklung 4. Innerhalb des Außengehäuses und von der Ständerwicklung 4 umschlossen ist ein Rotor 5 drehbar um eine Rotationsachse A in Lagern 6 gelagert. Bei den Lagern 6 kann es sich um konventionelle mechanische Lager oder auch um Magnetlager handeln. Der Rotor weist dabei auf einer Seite einen in dem entsprechenden Lager gelagerten, massiven axialen Rotorwellenteil 5a auf. Ferner enthält er ein Vakuumgefäß 7, in dem an z.B. hohlzylindrischen, Drehmoment übertragenden Aufhängeelementen 8 ein Wicklungsträger 9 mit einer HTS-Wicklung 10 gehaltert ist. In diesem Wicklungsträger ist konzentrisch zur Rotationsachse A ein sich in Achsrichtung erstreckender, zylindrischer Hohlraum vorhanden, der nachfolgend als zentraler Hohlraum 12 bezeichnet ist. Der Wicklungsträger ist dabei vakuumdicht gegenüber diesem Hohlraum ausgeführt. Er schließt diesen auf der dem Rotorwellenteil 5a zugewandten Seite ab. Auf der anderen Seite ist der zentrale Hohlraum 12 an einen axial seitlichen Hohlraum 13 mit vergleichsweise kleinerem Durchmesser angeschlossen, d.h. geht in diesen über. Dieser seitliche Hohlraum führt von dem Bereich des Wicklungsträgers nach außen aus dem Bereich des Außengehäuses 3 hinaus. Ein diesen seitlichen Hohlraum 13 umschließender, in einem der Lager 6 gelagerter, rohrförmiger Rotorwellenteil ist mit 5b bezeichnet.

Die Supraleitungseinrichtung 2 weist zu einer indirekten Kühlung ihrer Wicklung 10 über wärmeleitende Elemente ferner eine Kälteeinheit auf, die aus Figur 2 näher hervorgeht. Diese allgemein mit 15 bezeichnete Kälteeinheit umfasst mindestens einen Kaltkopf 16. Bei der Kälteeinheit kann es sich insbesondere um einem Kryokühler vom Typ Gifford-McMahon handeln. Vorzugsweise wird als ein regenerativer Kryokühler ein Pulsröhrenkühler oder Split-Stirling-Kühler gewählt. Dabei soll sich der Kaltkopf 16 und damit alle wesentlichen, weiteren Teile der Kälteeinheit außerhalb des Rotors 5 und des Außengehäuses 3 befinden. Für die zu verwendende Kälteeinheit mit dem Kaltkopf erforderliche Zusatzteile wie z.B. warme Druckausgleichsbehälter, Füllkapillaren, Überdruckventile zur Absicherung des Systems gegen Überdruck bei Aufwärmen sind in der Figur nicht dargestellt, jedoch allgemein bekannt. Der beispielsweise 0,5 bis etliche Meter seitlich von dem Rotor 5 angeordneten Kaltkopf 16 ragt beispielsweise mit einem Wärmeübertragungskörper in das Vakuum V' eines Vakuumgefäßes 23 hinein und weist an seinem kalten Ende eine Kalt- oder Wärmeaustauschfläche 17 auf. An diese Kaltfläche sind thermisch mindestens zwei vakuumisolierte, ortsfeste Wärmerohre 19 und 20 gekoppelt. Diese Wärmerohre erweitern sich jeweils in ihrem an die Kaltfläche 17 angrenzenden Bereich auf einen größeren Wärmeaustauschquerschnitt und bilden dort erweiterte Kondensorräume 19a bzw. 20a. Die Kondensorräume können so zusammen mit der Kaltfläche 17 als eine Kältemittelkondensorvorrichtung oder -kondensationseinheit 18 angesehen werden.

Von den Wärmerohren 19 und 20 wird nachfolgend das Rohr 20 als ein erstes Wärmerohr und das Rohr 19 als ein weiteres Wärmerohr bezeichnet. Diese Wärmerohre ragen seitlich in einem axialen Bereich in den seitlichen, mitrotierenden Hohlraum 13 des Rotors hinein. Hierzu ist ein nachfolgend als ein Einsteck- oder Montagerohr bezeichnetes, ortsfestes, bezüglich der Achse A konzentrisches Rohr 24 vorgesehen, das die Wärmerohre 19 und 20 zumindest bis in den Bereich des seitlichen Hohlraums 13 umschließt. Dieses Montagerohr ist seitlich in den Hohlraum 13 einzuführen. Zu einer radialen Abdichtung dieses Montagerohres 24 gegenüber dem den seitlichen Hohlraum 13 begrenzenden rohrförmigen Rotorwellenteil 5b dient eine in der Figur nicht näher ausgeführte Dichtungseinrichtung 21, die z.B. als Ferrofluiddichtung und/oder Labyrinthdichtung und/oder Spaltdichtung ausgebildet sein kann. In dem Montagerohr herrscht ein Vakuum V, das beispielsweise mit dem Vakuum V' in dem Vakuumgefäß 23 verbunden ist.

Mit Hilfe des weiteren Wärmerohrs 19 kann vorteilhaft eine Vorkühlung der zu kühlenden Teile des Rotors 5 erfolgen. Hierzu ragt dieses Wärmerohr als ein Kühlfinger in den zentralen Hohlraum 12 hinein, wo das Rohr an einem Ende 19b abgeschlossen ist. Das Rohr 19 soll dabei mit einem weiteren Kältemittel k₂ wie z. B. mit N₂ gefüllt sein, das eine zweite Kondensationstemperatur Tₖ₂ aufweist, welche im Allgemeinen über der Betriebstemperatur des für die Wicklung 10 verwendeten supraleitenden Materials liegt. In einer Abkühlphase kondensiert dieses weitere Kältemittel k₂ in dem Kondensorraum 19a der Kondensorvorrichtung 18 der Kälteeinheit 15. Unter Ausnutzung eines Thermosyphon-Effektes erwärmt es sich im Bereich des zentralen Hohlraums 12 und gelangt in dem Wärmerohr 19 zu der Kondensorvorrichtung 18 zurück.

Über das erste Wärmerohr 20 und den seitlichen Hohlraum 13 ist der zentrale Hohlraum 12 mit dem Wärmetauschbereich der Kondensorvorrichtung 18 gasdicht nach außen abgedichtet verbunden. Ein in diesen Räumen eingeschlossenes erstes Kältemittel wie z. B. Ne wird in einem Kreisprozess an der Kaltfläche 17 des Kaltkopfs 16 im Bereich der Kondensorvorrichtung 18 unter Wärmeabgabe kondensiert. Anschließend fließt das so verflüssigte, mit k₁ bezeichnete und in der Figur durch eine verstärkte Linie angedeutete Kondensat dann durch das erste Wärmerohr 20 zunächst durch den Bereich des seitlichen Hohlraums 13 und von dort in den zentralen Hohlraum 12. Der Transport des Kondensats durch das Wärmerohr geschieht dabei mittels einer Thermosyphon-Wirkung unter Einfluss der Schwerkraft. Hierzu kann vorteilhaft das Wärmerohr 20 geringfügig (um einige wenige Grad) gegenüber der Rotationsachse A geneigt sein, um so das Herausfließen des flüssigen Kältemittels k₁ aus dem offenen Ende 20b des Rohres 20 zu unterstützen. Gegebenenfalls wird der Kältemitteltransport auch durch eine Kapillarkraftwirkung der Innenwand des Wärmerohres unterstützt, die als ein "Docht" funktioniert. Die Funktion eines solches Dochtes kann noch durch passende Ausgestaltung wie mit Hilfe von Längsrippen oder Kanälen zur Vergrößerung der Oberfläche oder durch Auskleidung der Rohrinnenwand optimiert werden. Der Ausfluss des Kondensats k₁ in den Hohlraum 12 an dem Ende 20b des ersten Wärmerohres 20 kann noch durch eine besondere Ausformung dieses Endes , z.B. als eine Tropfkante, verstärkt werden. Desgleichen kann die Ausformung auch so gestaltet werden, dass durch eine Gasbewegung im rotierenden Innenraum auf Grund eines Windes des gasförmigen Teils des Kältemittels unter Rotation das Abtropfen unterstützt wird.

Endet das Wärmerohr 20 bereits im Bereich des seitlichen Hohlraums 13, so kann der Transport dieses Kältemittels k₁ in den zentralen Hohlraum 12 eventuell noch unter Ausnutzung der Schwerkraft und/oder Fliehkraft dadurch unterstützt werden, dass der seitliche Hohlraum 13 als ein sich in Richtung auf den zentralen Hohlraum 12 bezüglich seines Durchmessers erweiterndes Rohr gestaltet ist.

Im Inneren des Rotors wird dann das flüssige erste Kältemittel bzw. Kondensat k₁ verdampft. Das dampfförmige Kältemittel ist mit k₁' bezeichnet. Dieses unter Aufnahme von Wärme verdampfte Kältemittel k₁' strömt dann durch das Innere des ersten Wärmerohres 20 zurück in den Kondensorraum 20a der Kondensorvorrichtung 18. Hierbei wird der Rückstrom durch einen leichten Überdruck im als Verdampfer wirkenden Hohlraum 12 relativ zu der Kondensorvorrichtung getrieben, der durch das Entstehen von Gas im Verdampfer und das Verflüssigen in der Kondensorvorrichtung verursacht wird. Verdampftes Kältemittel k₁' füllt auch den Zwischenraum zwischen dem rohrförmigen Rotorwellenteil 5b und dem Montagerohr 24 bis zu der Dichtungseinrichtung 21.

Bei der erfindungsgemäßen Supraleitungseinrichtung ist also das erste Wärmerohr stationär an eine Kältemaschine gekoppelt. Hiermit ist eine Übertragung des Kältemittels in den kryogenen Bereich vorgesehen, wobei der Übergang zwischen feststehenden und rotierenden Teilen durch abtropfende Flüssigkeit und der Rückweg durch strömendes Gas erfolgt.

Erfindungsgemäß sollen zu der Vorkühlung und der Kühlung während der Betriebsphase zumindest zwei verschiedenen Kältemittel k₂ und k₁ mit unterschiedlicher Siede- bzw. Kondensationstemperatur (Tₖ) vorgesehen sein. Dabei soll das als weiteres Kältemittel k₂ bezeichnete Kältemittel eine zweite Kondensationstemperatur Tₖ₂ aufweisen, die im Allgemeinen oberhalb der für einen Dauerbetrieb der supraleitenden Wicklung vorgesehenen Betriebstemperatur liegt. Je nach Betriebstemperatur kommt für dieses weitere Kältemittel k₂ z.B. Stickstoff (Kondensationstemperatur 77,4 K. bei Normaldruck, Tripelpunkt bei 65 K, kritischer Punkt bei 125 K und 22 bar) oder Argon (Kondensationstemperatur 87,3 K bei Normaldruck, Tripelpunkt bei 85 K, kritischer Punkt bei 145 K und 38 bar) in Frage. Demgegenüber soll das erste Kältemittel k₁ eine vergleichsweise niedrigere Kondensationstemperatur Tₖ₁ besitzen. Diese Temperatur kann so gewählt werden, dass die Betriebstemperatur der supraleitenden Wicklung nur wenig, beispielsweise bis zu 20 K, höher als diese Kondensationstemperatur liegt. Deshalb können bevorzugt Wasserstoff (Kondensationstemperatur 20,4 K bei Normaldruck, Tripelpunkt bei 14 K, kritischer Punkt bei 30 K und 8 bar) oder Neon (Kondensationstemperatur 27,1 K bei Normaldruck, Tripelpunkt bei 25 K, kritischer Punkt bei 42 K und 20 bar) als erstes Kältemittel k₁ verwendet werden. Entsprechende Beispiele für Kältemittel-Paare k₁-k₂ sind Neon(Tₖ₁ von 27,1 K)-Argon(Tₖ₂ von 87,3 K) oder das Kältemittelpaar Neon-Stickstoff(Tₖ₂ von N₂ : 77,4 K) oder als Kältemittelpaar Wasserstoff(Tₖ₁ von 20,4 K)-Stickstoff , falls eine Betriebstemperatur vorgesehen sein soll, die unter Tₖ₂ liegt und beispielsweise etwa 25 K beträgt. Bei dieser Betriebstemperatur bleibt also das mindestens eine weitere Kältemittel k₂ in dem Wärmerohr 19 ausgefroren oder gegebenenfalls auch flüssig.

Für einen Abkühlvorgang während einer Abkühlphase dient das ebenfalls stationär an die Kältemaschine 15 angekoppelte weitere Wärmerohr 19. Nachfolgend wird dieser Kühlvorgang näher erläutert:
Da erfindungsgemäß wenigstens zwei Kältemittel mit unterschiedlichen Kondensationstemperaturen vorgesehen sind, wird bei einer allmählichen Abkühlung des Kaltkopfes zunächst das mindestens eine weitere Kältemittel k₂ mit der höchsten Kondensationstemperatur (hier: Tₖ₂) kondensieren und in einem geschlossenen Thermosyphon-Kreislauf wie im Falle des ersten Kältemittels zur Wärmeübertragung an die zu kühlenden Teile des Rotors herangezogen. Nach einer entsprechenden Vorkühlung dieser Teile bis ungefähr zur Tripelpunkttemperatur dieses weiteren Kältemittels wird dieses dann im Bereich der Kondensorvorrichtung ausfrieren, worauf diese bis zur Kondensationstemperatur des nächsten (ersten) Kältemittels abgekühlt wird. Auf diese Weise kann bei geeigneter Wahl der Kältemittel eine quasi kontinuierliche Abkühlung bei optimaler Ausnutzung der Kälteleistung des Kaltkopfes realisiert werden.

Selbstverständlich ist auch eine entsprechende stufenweise Vorkühlung mit mehreren als Kühlfinger gestalteten (weiteren) Wärmerohren möglich, die mit Füllungen unterschiedlicher (weiterer) Kältemittel vorgesehen werden, die sich hinsichtlich ihrer Kondensationstemperaturen unterscheiden.

Bei der vorstehend erläuterten Supraleitungseinrichtung 2 wurde davon ausgegangen, dass ihre wenigstens eine Kälteeinheit 15 einen einstufigen Kaltkopf 16 besitzt. Das bedeutet, dass lediglich eine Stufe zur Bereitstellung der Kälteleistung vorgesehen oder ausgenutzt wird. Es versteht sich jedoch von selbst, dass ebenso gut auch mehrstufig ausgebildete Kaltköpfe geeignet sind, deren Stufen auf unterschiedlichen Temperaturniveaus liegen. So kann z.B. bei einem entsprechenden zweistufigen Kaltkopf die zweite (wärmere) Stufe mit dem Kondensorraum 19a des weiteren (zweiten) Wärmerohres 19 für das zweite Kältemittel k₂ verbunden sein, während man an die erste, auf vergleichsweise tieferer Temperatur gehaltene Stufe thermisch den Kondensorraum 20a des ersten Wärmerohres 20 für das erste Kältemittel k₁ ankoppeln kann. Auf diese Weise ist eine effektive Vorkühlung möglich.

Gegebenenfalls lässt sich auch mittels der zweiten (wärmeren) Stufe eines solchen zweistufigen Kaltkopfes eine Stromzuführung oder ein Strahlungsschild kühlen.

Bei der Supraleitungseinrichtung 2 kann ihr Wicklungskörper 9 hinreichend wärmeleitend ausgeführt sein; d.h., er weist dann gut wärmeleitende Teile zwischen seiner Wand zum zentralen Hohlraum 12 und der Wicklung 10 auf. Auf diese Weise ist die Wicklung über den Wicklungskörper 9, das Kältemittel k₁ und k₁', den Kondensorraum 20a der Kondensorvorrichtung 18 auf einfache Weise thermisch an die Kaltfläche 17 des Kaltkopfes 16 der Kälteeinheit 15 angekoppelt. Zur Verbesserung des Wärmeübertrags können gegebenenfalls die Wärmeaustauschflächen bezüglich des Kältemittels k₁, k₁' vergrößernde Maßnahmen, beispielsweise eine Rippung in Umfangsrichtung an der Wicklungsträgerwand des zentralen Hohlraums 12, vorgesehen sein.

Selbstverständlich müssen die die Kältemittel k₁ und k₂ umschließenden Teile/Behältnisse gegen Wärmeeinleitung geschützt sein. Zu ihrer thermischen Isolation wird deshalb zweckmäßig eine Vakuumumgebung vorgesehen, wobei gegebenenfalls in den entsprechenden Vakuumräumen zusätzliche noch Isolationsmittel wie z.B. Superisolation oder Isolationsschaum vorgesehen werden können. In Figur 1 ist das von dem Vakuumgefäß 7 eingeschlossene Vakuum mit V bezeichnet. Es umgibt außerdem das den seitlichen Hohlraum 13 umschließende, sich bis zu der Dichtung 21 erstreckende Montagerohres 24. Das die Wärmerohre 19 und 20 sowie die Kondensorräume 19a und 20a der Kondensorvorrichtung 18 und zumindest die Kaltfläche 17 des Kaltkopfes 16 umschließende Vakuum ist mit V' bezeichnet. Darüber hinaus kann gegebenenfalls auch in dem den Rotor 5 umgebenden, von dem Außengehäuse 3 umschlossenen Raum 22 ein Unterdruck erzeugt werden.

Figur 3 zeigt eine spezielle Ausgestaltung einer Supraleitungseinrichtung 2' mit einer nicht dargestellten Kälteeinheit 15 im Bereich des Übergangs von einem seitlichen Hohlraum 13' in einen zentralen Hohlraum 12. Der seitliche Hohlraum ist dabei in Abweichung gegenüber der in Figur 2 gezeigten Ausführungsform in einem Bereich 13a sich in Richtung auf den zentralen Hohlraum 12 hin konisch erweiternd ausgeführt. In diesem Erweiterungsbereich endet das Montagerohr 24, aus dem zwei Wärmerohre 20' und 19 für ein erstes Kältemittel k₁ bzw. ein weiteres Kältemittel k₂ herausragen. Das ein weiteres Wärmerohr darstellende Rohr 19 endet entsprechend Figur 2 im Bereich des zentralen Hohlraums 12. Demgegenüber hat das als ein erstes Wärmerohr 20' anzusehende Rohr sein offenes Ende 20b in dem Erweiterungsbereich 13a. Aus diesem offenen Ende tritt das erste Kältemittel k₁ in flüssiger Form aus. Verdampftes erstes Kältemittel k₁' wird über dieses Wärmerohr 20' in Figur 2 entsprechender Weise einer Kondensorvorrichtung zur Rekondensation zugeführt.

Bei der in den Figuren dargestellten Ausführung einer Supraleitungseinrichtung 2 oder 2' mit Rotor 5 ist eine Einmalbefüllung mit den Kältemitteln vorgesehen. Sofern die Kälteeinheit abgeschaltet wird und sich die kalten Teile aufwärmen, wird der Druck im Rohr- bzw. Hohlraumsystem durch Verdampfen des Kältemittels ansteigen. Dabei hängt der Enddruck von den eingeschlossenen Volumina und der Menge des jeweiligen Kältemittels im System ab. Falls z.B. Neon bei etwa 1 bar und 27 K und minimaler Flüssigkeitsmenge als erstes Kältemittel benutzt wird, ist davon auszugehen, dass nach einem Aufwärmen auf Raumtemperatur von etwa 300 K der Druck bei über 12 bar liegen wird. Da dieser Druck die rotierende Dichtung 21 belastet, kann es gegebenenfalls vorteilhaft sein, ein externes, warmes Puffervolumen vorzusehen. Sofern dieses Volumen das n-Fache des kalten Volumens des Kältemittels k₁, k₁' beträgt, kann der Druckanstieg im Warmen auf das 1:(n+1)-Fache auf diese Weise reduziert werden.

## Patentansprüche

1. Supraleitungseinrichtung (2)
- mit einem um eine Rotationsachse (A) drehbar gelagerten Rotor (5), der mindestens eine supraleitende Wicklung (10) aufweist, deren Leiter in einem Wicklungsträger (9) angeordnet sind,
- mit einer Kälteeinheit (15), die mindestens einen thermisch an die Wicklung (10) angekoppelten Kaltkopf (16) aufweist,
- wobei der Wicklungsträger (9) mit einem zentralen, sich in Achsrichtung erstreckenden Hohlraum (12) versehen ist, der mit einem seitlich aus dem Wicklungsträgerbereich heraus führenden seitlichen Hohlraum (13) verbunden ist,
- und sich der Kaltkopf (16) feststehend außerhalb des Rotors (5) befindet und mit einer Kaltfläche (17) in thermischer Verbindung mit einer Kondensorvorrichtung (18) zur Kondensation eines ersten Kältemittels (k1, k1') steht,
- wobei ein erstes feststehendes Wärmerohr (20) für das erste Kältemittel (k1, k1') von der Kondensorvorrichtung (18) in den mitrotierenden, seitlichen Hohlraum (13) und gegebenenfalls bis in den Bereich des zentralen Hohlraums (12) führt,
**dadurch gekennzeichnet** ,
a) dass die Kaltfläche (17) in thermischer Verbindung mit der Kondensorvorrichtung (18) zur Kondensation wenigstens eines weiteren Kältemittels (k2) steht, wobei die Kondensation des ersten und des wenigstens einen weiteren Kältemittels in getrennten Kondensorräumen (20a bzw. 19a) stattfindet und wobei sich die Kältemittel hinsichtlich ihrer Kondensationstemperaturen unterscheiden,
b) dass auch wenigstens ein weiteres feststehendes Wärmerohr (19) für das wenigstens eine weitere Kältemittel (k2) von der Kondensorvorrichtung (18) in den mitrotierenden seitlichen Hohlraum (13) und gegebenenfalls bis in den Bereich des zentralen Hohlraums (12) führt,
c) dass das erste, endseitig offene Wärmerohr (20), der seitliche Hohlraum (13) und der zentrale Hohlraum (12) mit dem ersten Kältemittel (k1, k1') gefüllt sind, wobei in einer Betriebsphase der Einrichtung (2) unter Ausnutzung eines Thermosyphon-Effektes kondensiertes Kältemittel (k1) in den zentralen Hohlraum (12) sowie dort erwärmtes, gegebenenfalls verdampfendes Kältemittel (k1') wieder über das erste Wärmerohr (20) zurück zu dessen Kondensorraum (20a) gelangt, sowie
d) dass das wenigstens eine weitere Wärmerohr (19) als ein in dem zentralen Hohlraum (12) endseitig abgeschlossener Kühlfinger mit einer Füllung des wenigstens einen weiteren Kältemittels (k2) ausgebildet ist, wobei in einer Abkühlphase unter Ausnutzung eines Thermosyphon-Effektes in dem Kondensorraum (19a) des Rohres (19) kondensiertes Kältemittel (k2) sich im Bereich des zentralen Hohlraums (12) unter Verdampfung erwärmt und so verdampftes Kühlmittel zu dem Kondensorraum (19a) zurück gelangt.

2. Einrichtung nach Anspruch 1, **dadurch gekennzeichnet, dass** mehrere als Kühlfinger gestaltete weitere Wärmerohre mit Füllungen weiterer Kältemittel vorgesehen sind, die sich hinsichtlich ihrer Kondensationstemperaturen unterscheiden.

3. Einrichtung nach Anspruch 1 oder 2, **dadurch gekennzeichnet , dass** der zentrale Hohlraum (12) auf einer Seite durch den Wicklungsträger (9) abgeschlossen ist und der seitliche Hohlraum (13) an der dem Kaltkopf (16) zugewandten Seite durch eine Dichtungseinrichtung (21) mit mitrotierenden Teilen abgedichtet ist.

4. Einrichtung nach Anspruch 3, **dadurch gekennzeichnet, dass** die Dichtungseinrichtung (21) zumindest eine Dichtung aus der Gruppe Ferrofluiddichtung, Labyrinthdichtung, Spaltdichtung aufweist.

5. Einrichtung nach einem der vorangehenden Ansprüche, **dadurch gekennzeichnet , dass** die den Kaltkopf (16) umfassende Kälteeinheit (15) mindestens einen insbesondere regenerativen Kryokühler aufweist.

6. Einrichtung nach Anspruch 5, **dadurch gekennzeichnet, dass** der Kryokühler ein Pulsröhrenkühler oder ein Split-Stirling-Kühler oder ein Gifford-McMahon-Kühler ist.

7. Einrichtung nach einem der vorangehenden Ansprüche, **gekennzeichnet durch** eine mehrstufige Ausbildung des Kaltkopfes.

8. Einrichtung nach Anspruch 7, **dadurch gekennzeichnet, dass** der Kaltkopf zwei Kältestufen aufweist, wobei die zweite Stufe thermisch mit einer Stromzuführung oder einem Strahlungsschild und die erste, auf vergleichsweise tieferer Temperatur liegende Stufe thermisch mit den Kondensorräumen (19a, 20a) der Wärmerohre (19, 20) verbunden sind.

9. Einrichtung nach Anspruch 7, **dadurch gekennzeichnet, dass** der Kaltkopf zwei Kältestufen aufweist, wobei die zweite Stufe thermisch mit dem Kondensorraum (19a) des weiteren Wärmerohres (19) und die erste, auf vergleichsweise tieferer Temperatur liegende Stufe thermisch mit dem Kondensorraum (20a) des ersten Wärmerohres (20) verbunden sind.

10. Einrichtung nach einem der vorangehenden Ansprüche, **dadurch gekennzeichnet , dass** die supraleitende Wicklung (10) mittels des Kaltkopfes (16) auf einer Temperatur unter 77 K zu halten ist.

11. Einrichtung nach einem der vorangehenden Ansprüche, **dadurch gekennzeichnet , dass** die Leiter der Wicklung (10) Niedrig-T_{c}-Supraleitermaterial oder Hoch-T_{c}-Supraleitermaterial enthalten.

12. Einrichtung nach einem der vorangehenden Ansprüche, **dadurch gekennzeichnet , dass** das erste Wärmerohr (20) an seinem in den seitlichen Hohlraum (13) oder in den zentralen Hohlraum (12) hinein ragenden, offenen Ende (20a) als Tropfkante ausgebildet ist.

13. Einrichtung nach einem der vorangehenden Ansprüche, **dadurch gekennzeichnet , dass** der seitliche Hohlraum (13) sich in Richtung auf den zentralen Hohlraum (12) hin erweiternd ausgebildet ist.

14. Einrichtung nach einem der vorangehenden Ansprüche, **dadurch gekennzeichnet , dass** zumindest die kalten Teile des Rotors (5) und die Wärmerohre (19, 20) vakuumisoliert sind.

15. Einrichtung nach einem der vorangehenden Ansprüche, **dadurch gekennzeichnet , dass** als Kältemittel-Paar (k₁-k₂) Neon-Stickstoff oder Neon-Argon oder Wasserstoff-Stickstoff vorgesehen ist.

## Claims

1. A superconductive device (2)
- with a rotor (5) which is mounted so that it can be rotated about an axis of rotation (A) and which features at least one superconductive winding (10), the conductors of which are arranged in a winding support (9),
- with a refrigeration unit (15) which features at least one refrigeration head (16) that is thermally coupled to the winding (10),
- with the winding support (9) being equipped with a central cavity (12) extending in the direction of the axis, which is connected to a lateral cavity (13) leading laterally out of the winding support area,
- and the refrigeration head (16) being situated in a fixed manner outside the rotor (5) and being thermally connected by means of a cold surface (17) to a condenser device (18) for the purposes of condensing a first coolant (k₁, k₁'),
- a first fixed thermal tube (20) for the first coolant (k₁, k₁') and at least one further fixed thermal tube (19) for at least one further coolant (k₂) lead from the condenser device (18) into the co-rotating lateral cavity (13) and where relevant into the area of the central cavity (12),
**characterized in that**
(a) the cold surface (17) is thermally connected to the condenser device (18) for condensing at least one further coolant (k2), with the condensation of the first and of the at least one further coolant being undertaken in separate condenser areas (20a or 19a) and with the coolants differing as regards their coolant temperatures,
b) at least one further fixed thermal tube (19) for the at least one further coolant (k2) leads from the condenser device into the co-rotating lateral cavity (13) and where necessary into the area of the central cavity (12),
c) the first, open-ended thermal tube (20), the lateral cavity (13) and the central cavity (12) are filled with the first coolant (k₁, k₁'), where, in an operating phase of the device (2), by exploiting a thermosyphon effect, condensed coolant (k₁) passes into the central cavity (12) and also coolant (k₁') warmed and where relevant in the process of evaporating there passes back via the first thermal tube (20) again to its condenser chamber (20a),
d) at least one further thermal tube (19) is realized as a cooling finger that is closed at the end in the central cavity (12) with a filling of at least one further coolant (k2), where, in a cooling phase, by exploiting a thermosyphon effect, coolant (k2) condensed in the condenser chamber (19a) of the tube (19) is warmed by evaporation in the area of the central cavity (12) and coolant evaporated in this way passes back to the condenser chamber (19a).

2. Device in accordance with claim 1, **characterized in that** a plurality of further thermal tubes in the form of cooling fingers with fillings of further coolants, which differ in terms of their condensation temperatures, is provided.

3. Device in accordance with claim 1 or 2, **characterized in that** the central cavity (12) is closed by the winding support (9) on one side and the lateral cavity (13) is sealed by a sealing device (21) with co-rotating parts on the side facing the refrigeration head (16).

4. Device in accordance with claim 3, **characterized in that** the sealing device (21) features at least one seal in the category ferrofluid seal, labyrinth seal, diaphragm gland.

5. Device in accordance with one of the preceding claims, **characterized in that** the refrigeration unit (15) comprising the refrigeration head (16) features at least one, in particular regenerative, cryocooler.

6. Device in accordance with claim 5, **characterized in that** the cryocooler comprises a pulse tube cooler or a split Stirling cooler or a Gifford-McMahon cooler.

7. Device in accordance with one of the preceding claims, **characterized by** a multistage realization of the refrigeration head.

8. Device in accordance with claim 7, **characterized in that** the refrigeration head features two refrigeration stages, where the second stage is thermally connected to a power supply or a radiation shield and the first stage, lying at a lower temperature by comparison, is thermally connected to the condenser chambers (19a, 20a) of the thermal tubes (19, 20).

9. Device in accordance with claim 7, **characterized in that** the refrigeration head features two refrigeration stages, where the second stage is thermally connected to the condenser chamber (19a) of the further thermal tube (19) and the first stage, lying at a lower temperature by comparison, is thermally connected to the condenser chamber (20a) of the first thermal tube (20).

10. Device in accordance with one of the preceding claims, **characterized in that** the superconductive winding (10) can be kept at a temperature below 77 K by means of the refrigeration head (16).

11. Device in accordance with one of the preceding claims, **characterized in that** the conductors of the winding (10) contain low T_{c} superconductive material or high T_{c} superconductive material.

12. Device in accordance with one of the preceding claims, **characterized in that** the first thermal tube (20) is realized as a drip rim at its open end (20a) projecting into the lateral cavity (13) or into the central cavity (12).

13. Device in accordance with one of the preceding claims, **characterized in that** t the lateral cavity (13) is realized as widening in the direction of the central cavity (12).

14. Device in accordance with one of the preceding claims, **characterized in that** at least the cold parts of the rotor (5), and the thermal tubes (19, 20), are vacuum-insulated.

15. Device in accordance with one of the preceding claims, **characterized in that** neon/nitrogen or neon/argon or hydrogen/nitrogen is provided as the coolant pair (k₁/k₂).

## Revendications

1. Dispositif (2) à supraconductivité
- comprenant un rotor (5) qui est monté tournant autour d'un axe (A) de rotation et qui a au moins un enroulement (10) supraconducteur dont les conducteurs sont disposés dans un porte-enroulement (9),
- comprenant une unité (15) froide qui a au moins une tête (16) froide couplée thermiquement à l'enroulement (10),
- dans lequel le porte-enroulement (9) est muni d'une cavité (12) centrale qui s'étend dans la direction de l'axe et qui communique avec une cavité (13) latérale sortant latéralement de la zone du porte-enroulement,
- et la tête (16) froide se trouve de manière fixe à l'extérieur du rotor (5) et, par une surface (17) froide, est en liaison thermique avec un dispositif (18) de condenseur pour la condensation d'un premier fluide (k1, k1') frigorigène,
- dans lequel un premier caloduc (20) fixe pour le premier fluide (k1, k1') frigorigène va du dispositif (18) à condenseur à la cavité (13) latérale qui tourne en même temps et, le cas échéant, jusqu'à la zone de la cavité (12) centrale,
**caractérisé**
a) en ce que la surface froide est en liaison thermique avec le dispositif (18) à condenseur pour la condensation d'au moins un autre fluide (k2) frigorigène, la condensation du premier et du au moins un autre fluide frigorigène ayant lieu dans des chambres (20a et 19a) de condenseur séparées et les fluides frigorigènes différant par leur température de condensation,
b) en ce qu'au moins un autre caloduc (19) fixe pour le au moins un autre fluide (k2) frigorigène va aussi du dispositif (18) à condenseur dans la cavité (13) latérale tournant en même temps et, le cas échéant, jusque dans la zone de la cavité (12) centrale,
c) en ce que le premier caloduc (20) ouvert du côté de l'extrémité, la cavité (13) latérale et la cavité (12) centrale sont emplis du premier fluide (k1, k1') frigorigène, du fluide (k1) frigorigène condensé dans une phase de fonctionnement du dispositif (2), en utilisant un effet de thermosiphon, étant retourné à la cavité (12) centrale, tandis que du fluide (k1') frigorigène préchauffé et éventuellement évaporé est retourné par le premier caloduc (20) à sa chambre (20a) de condensateur, et
d) en ce que le au moins un autre caloduc (19) est constitué sous la forme d'un doigt de refroidissement fermé du côté de l'extrémité dans la cavité (12) centrale et rempli du au moins un autre fluide (k2) frigorigène, du fluide (k2) frigorigène condensé dans une phase de refroidissement, en utilisant un effet de thermosiphon, dans la chambre (19a) de condenseur du caloduc (19) étant réchauffé dans la zone de la cavité (12) centrale avec évaporation, et du fluide frigorigène ainsi évaporé étant retourné à la chambre (19a) de condenseur.

2. Dispositif suivant la revendication 1, **caractérisé en ce qu'**il est prévu plusieurs autres caloducs conformés en doigts de refroidissement ayant des remplissages d'autres fluides frigorigènes qui diffèrent par leur température de condensation.

3. Dispositif suivant la revendication 1 ou 2, **caractérisé en ce que** la cavité (12) centrale est fermée d'un côté par le porte-bobine (9), et la cavité (13) latérale est rendue étanche du côté tourné vers la tête (16) froide par un dispositif (21) d'étanchéité ayant des parties qui tournent en même temps.

4. Dispositif suivant la revendication 3, **caractérisé en ce que** le dispositif (21) d'étanchéité a au moins une étanchéité choisie dans le groupe d'une étanchéité par ferrofluide, d'une étanchéité par labyrinthe et d'une étanchéité par fente.

5. Dispositif suivant l'une des revendications précédentes, **caractérisé en ce que** l'unité (15) de refroidissement comprenant la tête (16) froide a au moins un cryorefroidisseur, notamment régénératif.

6. Dispositif suivant la revendication 5, **caractérisé en ce que** le cryorefroidisseur est un refroidisseur à tube pulsé ou un refroidisseur Split-Stirling ou un refroidisseur Gifford-MacMahon.

7. Dispositif suivant l'une des revendications précédentes, **caractérisé par** une constitution en plusieurs étages de la tête froide.

8. Dispositif suivant la revendication 7, **caractérisé en ce que** la tête froide a deux étages de refroidissement, le deuxième étage communiquant thermiquement avec une entrée de courant ou avec un bouclier vis-à-vis du rayonnement et le premier étage, se trouvant à une température relativement plus basse, étant relié thermiquement aux chambres (19a, 20a) de condenseur des caloducs (19, 20).

9. Dispositif suivant la revendication 7, **caractérisé en ce que** la tête froide a deux étages de refroidissement, le deuxième étage étant relié thermiquement à la chambre (19a) de condenseur de l'autre caloduc (19) et le premier étage, se trouvant à une température relativement plus basse, étant relié thermiquement à la chambre (20a) de condenseur du premier caloduc (20).

10. Dispositif suivant l'une des revendications précédentes, **caractérisé en ce que** l'enroulement (10) supraconducteur doit être maintenu au moyen de la tête (16) froide à une température inférieure à 77 K.

11. Dispositif suivant l'une des revendications précédentes, **caractérisé en ce que** les conducteurs de l'enroulement (10) contiennent du matériau supraconducteur à T_{c} basse ou du matériau supraconducteur à T_{c} haute.

12. Dispositif suivant l'une des revendications précédentes, **caractérisé en ce que** le premier caloduc (20) est constitué en arête d'égouttage sur son extrémité (20a) ouverte pénétrant dans la cavité (13) latérale ou dans la cavité (12) centrale.

13. Dispositif suivant l'une des revendications précédentes, **caractérisé en ce que** la cavité (13) latérale s'élargit dans la direction de la cavité (12) centrale.

14. Dispositif suivant l'une des revendications précédentes, **caractérisé en ce qu'**au moins les parties froides du rotor (5) et les caloducs (19, 20) sont isolés par du vide.

15. Dispositif suivant l'une des revendications précédentes, **caractérisé en ce qu'**il est prévu, comme couple (k₁-k₂) de fluides de refroidissement, du néon et de l'azote ou du néon et de l'argon ou de l'hydrogène et de l'azote.
